# EUROPEAN PATENT APPLICATION

(11) **EP 3 169 141 A1**
(43) Date of publication of application: **17.05.2017**
(21) Application number: 15194505.2
(22) Date of filing: 13.11.2015
(51) Int. Cl.: H05B 6/78, A23L 3/01

(54) **MICROWAVE HEATING SYSTEM**

(71) Applicant: Bottle-Top Development Co., 540 Nantou City, Nantou County (TW)
(72) Inventor: CHANG, Hong-I, 540 Yongfeng Vil., Nantou City, Nantou County (TW); CHIN, Kuang-Tse, 540 Yongfeng Vil., Nantou City, Nantou County (TW); YU, Ya-Chun, 540 Yongfeng Vil., Nantou City, Nantou County (TW); HSIEH, Jung-Kuei, 540 Yongfeng Vil., Nantou City, Nantou County (TW); LIN, Chien-Hung, 540 Yongfeng Vil., Nantou City, Nantou County (TW)
(74) Representative: 2K Patentanwälte Blasberg Kewitz & Reichel

(57) **Abstract**

A microwave heating system heats a hermetic container (10) loaded with a heated object (11). The hermetic container (10) is accommodated and given pressure by a microwave transparent and pressure resistant module (40), and is fixed onto a transporting device (30) in a cyclic course. Microwave is generated by a microwave heating device (50) to perform heating. The hermetic container (10) is stirred while the transport device (30) carries and moves the hermetic container (10). The temperature of the hermetic container (10) or the heated object (11) is measured by a temperature measuring module (60). The number of times to stir and repeatedly heat the heated object (11) are appropriately determined in the design of the system. The output power and heating time of the microwave heating device (50) and the transmission speed of the transporting device (30) are adjustable during operations of the system, hence forming a closed-loop temperature control system.

## Description

### FIELD OF THE INVENTION

The present invention relates to a heating device and process for a heated object, and particularly the heating process and system that utilizes microwave as a heating means.

### BACKGROUND OF THE INVENTION

Microwave heating technologies are extensively applied in fields of household cooking and industrial processing. As microwave is a form of electromagnetic wave, the microwave power density distribution may change due to interactions of different factors such as microwave power generators, resonant cavities and heated objects, contributing to spatially non-uniform energy absorption and uneven temperature rises in certain areas.

To solve the above issue, the U.S. Patent Nos. 7,119,313 B2, 5,066,503 A and 8,586,899 B2 (to be referred to as prior arts 1 to 3) disclose a microwave heating system. An object to be heated (heated object) is placed in a pressure cavity filled with hot water and steam to absorb microwave power. The heated object is immersed in hot water and steam, so that it simultaneously receives heat inducted by the microwave and conducted from the hot water and steam. This is to reduce the impact of the foregoing issue of localized non-uniform heating. Additionally, by placing the heated object in a pressure cavity, inside the package of object the outward pressure produced due to the thermal expansion of the content of heated object and its generated steam can be counteracted to prevent from the damage of package.

Furthermore, the U.S. Patent No. 4,808,782 A (to be referred to as prior art 4) discloses a microwave sterilization system which resolved the issue of partial uneven temperature rises without operating inside a high pressure cavity or needing other heating medium. The heated object is sealed hermetically in a pressure and heat resistant container, which is then placed on a conveying belt to pass through a microwave cavity under atmospheric pressure for heating and sterilization.

This system includes a microwave generator fixed at one side of the conveying belt, partially heating the heated object, to compensate for the uneven temperature of heated object caused by non-uniform microwave power density distribution. This method does not resolve the issue of hot spots completely because of the dynamic property of microwave radiation, the spatial power distribution is ever changing. The pressure cavity adopted in prior art 1 to 3 have following restrictions.
1. It costs more in system construction, operation and maintenance since factors of leakage and safety need to be considered. Also, additional procedures and devices for a pressure barrier are required when a material enters and exits the pressure cavity during operation. Furthermore, besides the cost disadvantage, safety requirements are higher when the system operates under pressure higher than the atmospheric pressure.
2. The system experiences additional heat loss because it utilizes an additional heating medium other than microwave radiation (i.e., hot water or steam)
3. The temperature of a moving heated object cannot be measured in real-time when immersed in hot water or steam. Hence the sealed system does not possess the advantage of a closed-loop temperature control process. Said system is only a one-time operation heating system.
4. The disadvantages of being unable to measure the temperature of the heated object are: firstly, the heating effect of microwave upon the heated object needs to be precisely researched and programmed in advance into the manufacturing start-up. Secondly, no real-time processing information of the heated object is provided for the system to monitor the manufacturing procedure. Although prior art 4 is operated under atmospheric pressure and also includes an additional mechanism for heating selected areas of the heated object to compensate for its temperature variation, the operation mode of prior art 4 is nonetheless a one-time operation heating system. Said mechanism is neither in time nor effective due to the uncertainty of cold-spot location.

Evidently, the focus of current disclosed technology is to design a system to improve the uniformity of heating on the premise of an invariable heated object. However, the heating characteristic of microwave radiation is highly dynamic and load-correlated. That is, microwave power density distribution varies according to not only the heated object itself but also changes in thermal and electromagnetic factors in the heated object during the heating process. For example, to the same type of heated objects independent food factors such as volume, weight, geometric shapes and partial moisture content still notably affect the magnitude and uniformity of power absorption.

### SUMMARY OF THE INVENTION

It is a primary object of the present invention to provide a microwave heating system capable of solving the issue of an uneven microwave heating temperature distribution of the prior arts. Meanwhile, the system has substantial ability to achieve uniform temperature distribution notwithstanding the change of composition of the heated object.

The system of the present invention heats a hermetic container loaded with a heated object. The system includes a machine frame, a transporting device installed onto the machine frame, at least one microwave transparent and pressure resistant module, a microwave heating device, and a temperature measuring module. The microwave transparent and pressure resistant module encloses and presses the hermetic container, and is fixed on the transporting device. When the microwave transparent and pressure resistant module is carried and moved by the transporting device, the microwave heating device generates microwave, heating the hermetic container held by it. Furthermore, the heated object in hermetic container is stirred when moving and its temperature is measured by the temperature measuring module directly or indirectly.

In brief, the heated object is carried in the hermetic container, the hermetic container is enclosed and pressed by the microwave transparent and pressure resistant module, and the heated object is heated by microwave and stirred while moving. The hermetic container moving in the oven zone is stirred for many times to constantly shift the components of the heated object around, allowing the different components of different temperatures to fully perform thermal exchange. Thus, such stirring mechanism directly improves the issue of heating non-uniformity by stirring the heated object, and is extremely reliable although simple.

As the hermetic container is placed in the body of the microwave transparent and pressure resistant module and is pressed, the temperature of the manufacturing process may rise to above boiling point, efficiently reducing the heating time. On the other hand, in the present invention, when the temperature of the hermetic container or the heated object is measured by the temperature measuring unit directly, the output power of the microwave heating device and the transmission speed of the transporting device may be accordingly controlled. Thus, the heating temperature of the heated object inside the oven and the time it takes for the object to achieve temperature equilibrium may be adjusted, fulfilling the purpose of a closed-loop temperature control system. As the heating temperature and heating time of the heated object have become controllable parameters to ensure the processing reliability, a closed-loop heating process is formed, effectively overcoming variances caused by the operating environment of the system and different types of heated objects.

The present invention also includes a plurality of temperature measuring units. In the heating process, the temperature development of each heated object can be accordingly recorded, making the condition of individual objects traceable, and allowing manufacturers to carry out inspections to make sure the temperature development of products satisfy manufacturing requirements.

Meanwhile, the operation of the present invention is under normal pressure and do not involve other heating mediums. Therefore, products can go through the microwave heating process under safe and economic conditions.

### BRIEF DESCRIPTION OF THE DRAWINGS

- Fig. 1A: shows the present invention as looked from the outside;
- Fig. 1B: shows the system after removing a part of sheet metal;
- Fig. 2: shows the internal structure of the present invention;
- Fig. 3: shows the internal structure of the present invention from another angle;
- Fig. 4: shows a partially disassembled microwave transparent and pressure resistant module of the present invention;
- Fig. 5: shows a section view of the microwave transparent and pressure resistant module of the present invention;
- Fig. 6A: shows the assembled structure of the microwave transparent and pressure resistant module and one of the tracks of the present invention;
- Fig. 6B: shows the inverted assembled structure of the microwave transparent and pressure resistant module and one of the tracks of the present invention; and
- Fig. 7: is a flowchart of an application of the present invention.

### DETAILED DESCRIPTION OF THE PREFERRED EMBODIMENTS

Details and technical contents of the present invention are described with the accompanying drawings below.

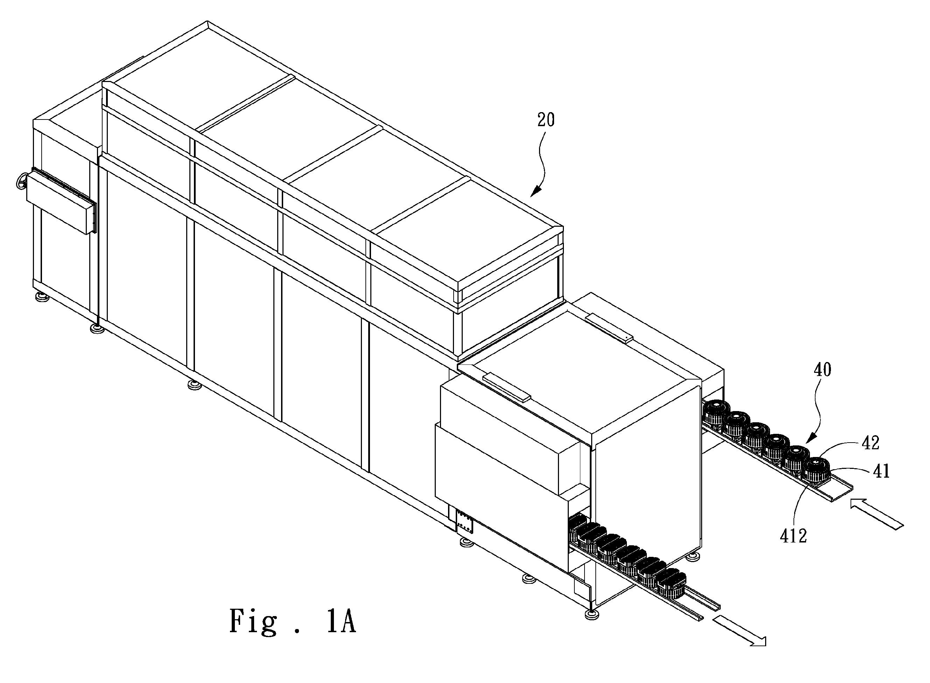

For the first embodiment of the present invention, please look at Fig. 1A, Fig. 1B, Fig. 2, Fig. 3 and Fig. 6A. the figures show a microwave heating system, heating hermetic container 10 The microwave heating system includes machine frame 20, transporting device 30, one or more than one microwave transparent and pressure resistant module 40, microwave heating device 50 and temperature measuring module 60.The transporting device 30, set onto the machine frame 20, contains a course that moves in a cycle, and may be a conveying belt or chain, or other devices with the same function. The transporting device 30 is capable of carrying and moving the set of microwave transparent and pressure resistant module 40.The moving course includes a stirring process, which may be overturning, vibration, rotation, or the combination of any of them. The stirring process allows the hermetic container 10 to overturn, vibrate or rotate to stir the heated object, allowing the heated object to be evenly heated.

When constructing the system, a head and a tail of the transporting device 30 may be connected and loop around at least one rotary wheel 31. The rotary wheel 31 is installed onto the machine frame 20 and moves transporting device 30 as it rotates. The rotary wheel 31 may take form as a wheel with a larger diameter rotating around a fixed point, two separate rotary wheels forming cyclic rotations, or multiple rotary wheels rotating collaboratively. In the embodiment of the disclosure, two rotary wheels in a cyclic rotation are given as an example. It should be noted that, the above example is not to be construed as a limitation to the present invention.

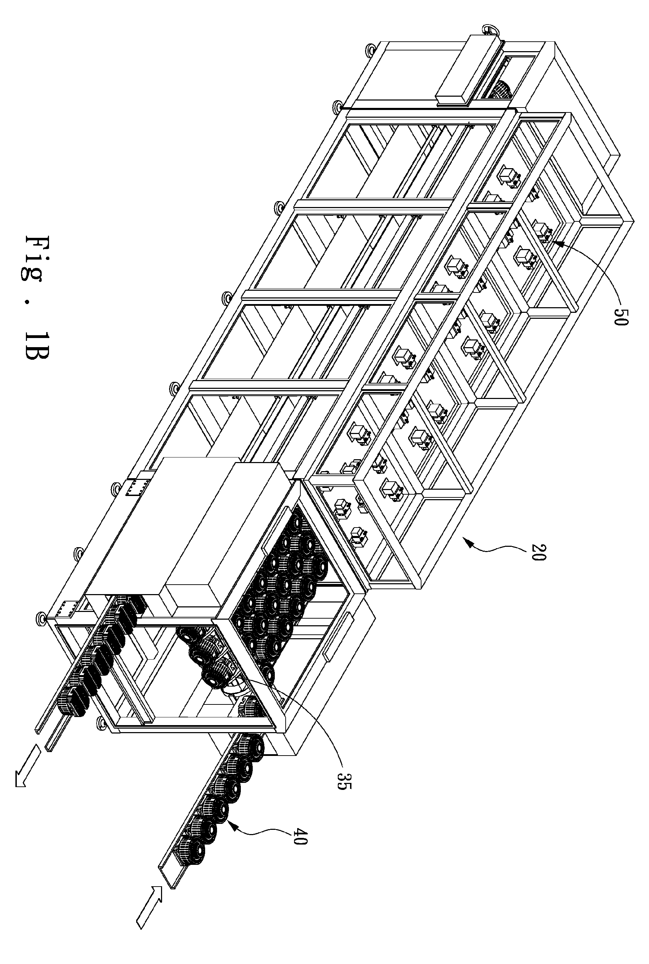

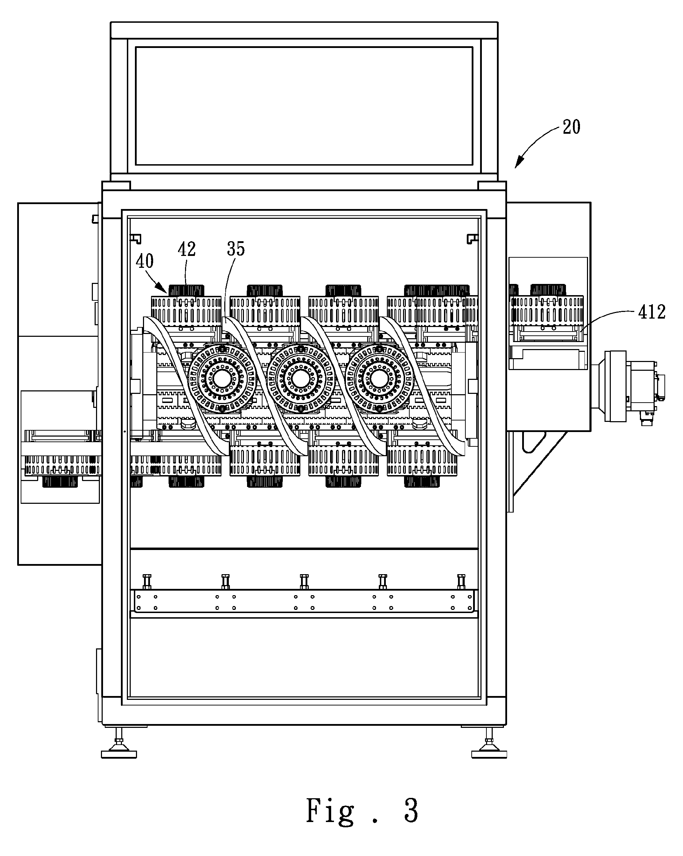

The hermetic container 10 is for containing the heated object 11.The loaded hermetic container 10 is then packaged in the Microwave transparent and pressure resistant module40, sequentially moving into the transporting device 30, and then moved along with it. With each cyclic round, the microwave transparent and pressure resistant module 40 moves towards the direction of an exit by one cyclic track, and leaves the microwave heating system after having reached the final round. In the present invention, with the guidance of a leaning, track-changing blocking plate 35 (as shown in Fig. 1B and Fig.3), the microwave transparent and pressure resistant module 40 is moved to another cyclic track.

Taking Fig. 1B for example, the transporting device 30 includes a total of four cyclic tracks. After sequentially entering the transporting device 30, the microwave transparent and pressure resistant module 40 passes through all of the four heating cyclic tracks and sequentially leaves the transporting device 30 from the exit. The number of cyclic tracks may be increased or decreased according to processing requirements when the system is constructed, and is not limited to the example of four cyclic tracks in Fig. 1B.

The microwave heating device 50 includes at least one magnetron controlled module 51 which performs microwave heating on the hermetic container 10, and is installed onto the machine frame 20 and located next to the transporting device 30 to readily perform microwave heating on the hermetic container 10 when the transporting device 30 carries and moves the microwave transparent and pressure resistant module 40.In the embodiment, the one or more than one magnetron controlled module 51 may be separately installed between the rotary wheels 31 and located above and below the transporting device 30, and is capable of generating microwave, i.e., performing microwave heating on the hermetic container 10 from above and below the transporting device 30.

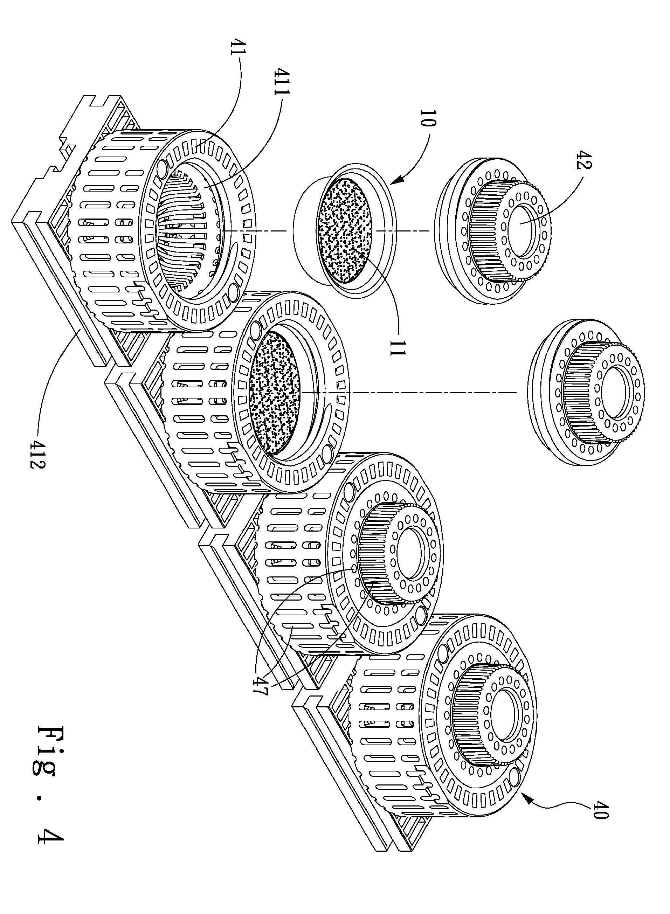

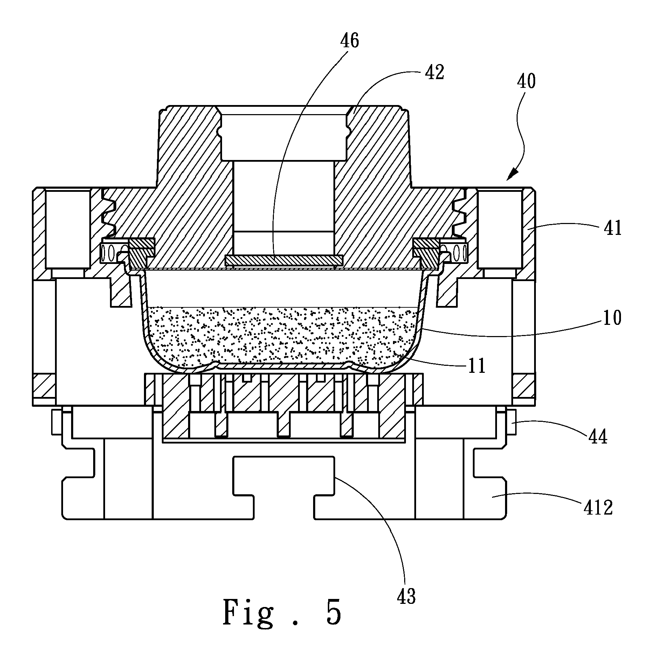

Referring to Fig. 4, Fig. 5 and Fig. 6A, the hermetic container 10 is for holding the heated object 11.In the present invention, the Microwave transparent and pressure resistant module 40 includes a pressure container 41 and a pressure cover 42, both of which made of material microwave permeable, e.g., quartz glass, polypropylene (PP), polyethylene (PE), polycarbonate (PC), polystyrene(PS), polytetrafluoroethylene (PTFE), polymethylpentene (PMP), or a microwave permeable composite material. The pressure container 41 is fixed on the transporting device 30, and possesses an accommodating space 411 for accommodating the hermetic container 10.The pressure resistant cover 42 simultaneously seals accommodating space 411 and presses against the hermetic container 10.The pressure resistant cover 42 sealing the accommodating space 411 can be a screw lock or a padlock.

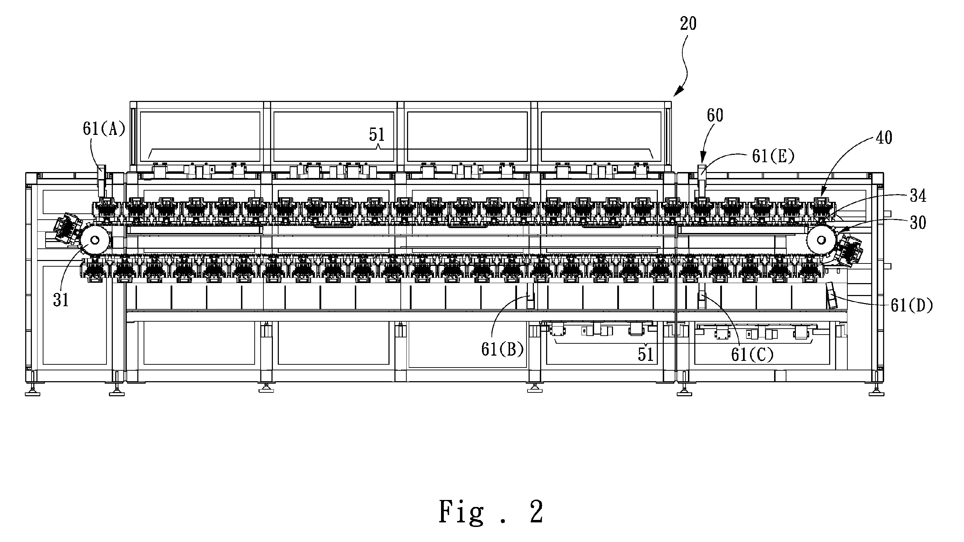

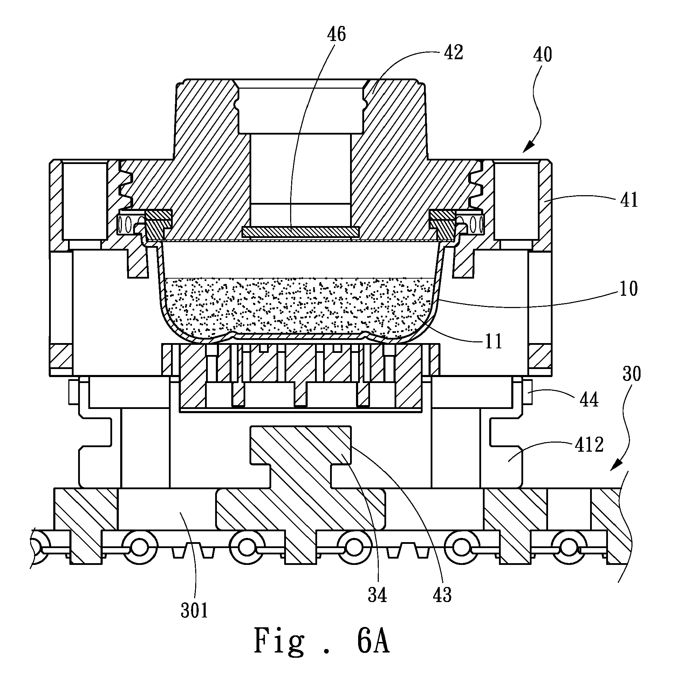

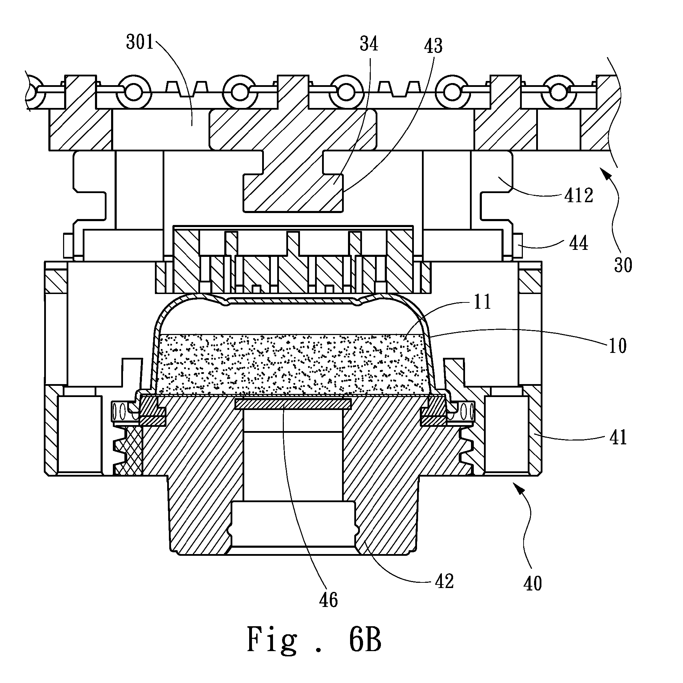

In the embodiment as shown in Fig. 6A and Fig. 6B, to prevent the pressure container 41 of the microwave transparent and pressure resistant module 40 and the transporting device 30 from disengaging when overturned, the transporting device 30 may include multiple fixing or clamping devices for fixing the pressure container 41 onto the transporting device 30.The transporting device 30 may include more than one inverted hooks 34, as the pressure container 41 correspondingly includes a lodging groove 43.The pressure container 41 be lodged into the lodging groove 43 with any of the inverted hooks 34 to steadily secure the pressure container 41 onto the transporting device 30.For manufacturing convenience, the pressure container 41 may include a tray 412, with the lodging groove43 on top. The pressure container 41 is fixed onto the tray 412 through a bolt 44. Furthermore, the temperature measuring module 60 includes at least one temperature measuring unit 61, which is placed upon the machine frame 20 and detects the temperature of the hermetic container 10. The one or more than one temperature measuring unit 61 is arranged and distributed next to the course of the transporting device 30, preferably at locations denoted A, B, C, D and E in Fig. 2.A is the position where the heated object has been heated after passing below the one or more than one magnetron controlled module 51; B, C and D are positions where the hermetic container 10 has reached internal thermal equilibrium after overturning and travelling different distances; and E is a starting position for heating, i.e., the position from which the hermetic container 10 re-enters the microwave heating zone. The number of the one or more than one temperature measuring unit 61 is determined according to the number of carrying points 301 of the transporting device 30.For example, when the number of carrying points 301 of the transport device 30 is four, it means that the system includes four cyclic tracks, and each hermetic container 10 leaves the transport device 30 after having circulated the transport device 30 for four times. Thus, the one or more than one temperature measuring unit 61 is arranged in a quantity of four respectively next to the positions A, B, C and D to measure the temperature of the hermetic container 10 or the heated object 11 during different phases of heating at the four carrying points 301.As such, the change in the temperature of the heated object 11 whilst moving on the transport device 30 can be detected and learned.

Referring to Fig. 2 and Fig. 3, the magnetron controlled modules 51 respectively arranged above and below the transport device 30 each have adjustable output powers. When the hermetic container 10 is repeatedly heated in the transport device 30, the present invention is capable of measuring the temperature of the hermetic container 10 or the heated object 11 therein at different positions. Accordingly, the heating powers of the magnetron controlled module 51 at different positions can be adjusted to meet a predetermined heating thermal profile for manufacturing requirements, thereby achieving optimum heating effects.

As contents of the heated object 11 processed at a same time do not drastically change, the temperature measuring unit 61 may also display the thermal development profile of the heated object 11 in the process, allowing the operator know whether the current heating power of the system is appropriate. The output power of the magnetron controlled module 51 may be adjusted so that the thermal profile of the heated object 11 repeatedly exiting and entering the heating zone satisfies a set value.

Furthermore, to enhance the convenience and accuracy of temperature measurement, the temperature measuring unit 61 contains an infrared temperature sensing component, and a temperature sampling plate 46 is set into the pressure resistant cover 42. The temperature sampling plate 46 may be made of materials such as plastic or quartz glass infrared ray permeable, or materials like aluminum alloy that are infrared ray impermeable and do not absorb microwave, but with good thermal conductivity so as to rapidly achieve temperature equilibrium between heated object and hermetic container, and sampling plate. Certain infrared thermal radiation of the heated object 11 may directly pass through the hermetic container 10 through the temperature sampling plate 46 and be measured by the temperature measuring unit 61, thus obtaining the temperature of the heated object 11 therein. Alternatively, the temperature sampling plate 46 may also be made of materials that have good thermal conductivity. In the manufacturing process, the heated object 11 is either separated only by a necessary packaging material to be in contact with the temperature sampling plate 46; or under an equivalent condition of temperature equilibrium, so that the temperature of the temperature sampling plate 46 sufficiently represents the temperature of the heated object 11 and may be detected by the temperature measuring unit 61.In other words, when the temperature sampling plate 46 is made of a material infrared ray permeable, the temperature measuring unit 61 can directly measure the temperature of the heated object 11; when the temperature sampling plate 46 is made of a substance with good thermal conductivity that is infrared ray impermeable, the temperature measuring unit 61 measures the temperature of the temperature sampling plate 46.

In the present invention, since the temperature of each hermetic container 10 or a heated object therein can be measured, the temperature development of each heated object during the heating process can then be recorded. According to the record, whether the temperature rise in each heated object satisfies the requirements of the manufacturing process can be easily determined. The heated object that fails to meet the requirement is filtered out at the exit to ensure the quality of products. To summarize, the one or more than one temperature measuring unit 61 records the temperature of the heated object, and decides whether to filter it out according to its temperature development.

The pressure resistant container 41 and the pressure resistant cover 42 may further include multiple channels 47. These channels 47 provide the pressure container 41 and the pressure resistant cover 42 with areas that connect with the ambient environment. When necessary, the channels 47 allow a strong airflow or a cooling liquid to pass through to become in contact with the hermetic container 10, so as to quickly cool and lower the temperature of the hermetic container 10 and the heated object 11 having been heated.

The head and the tail of the transport device 30 may be connected and surround the rotary wheel 31 to form cyclic rotations, and the hermetic container 10 placed in the transport device 30 is moved to the exit with the gradual track changing along with the rotation of the transporting device 30. Thus, the one or more than one magnetron controlled module 51 may heat the hermetic container 10 on the transport device 30, and the temperature of the heated object 11 or the hermetic container 10 is measured by the one or more than one temperature measuring unit 61, so that the temperature development of the heated object 11 or the hermetic container 10 may satisfy a set value of the manufacturing process.

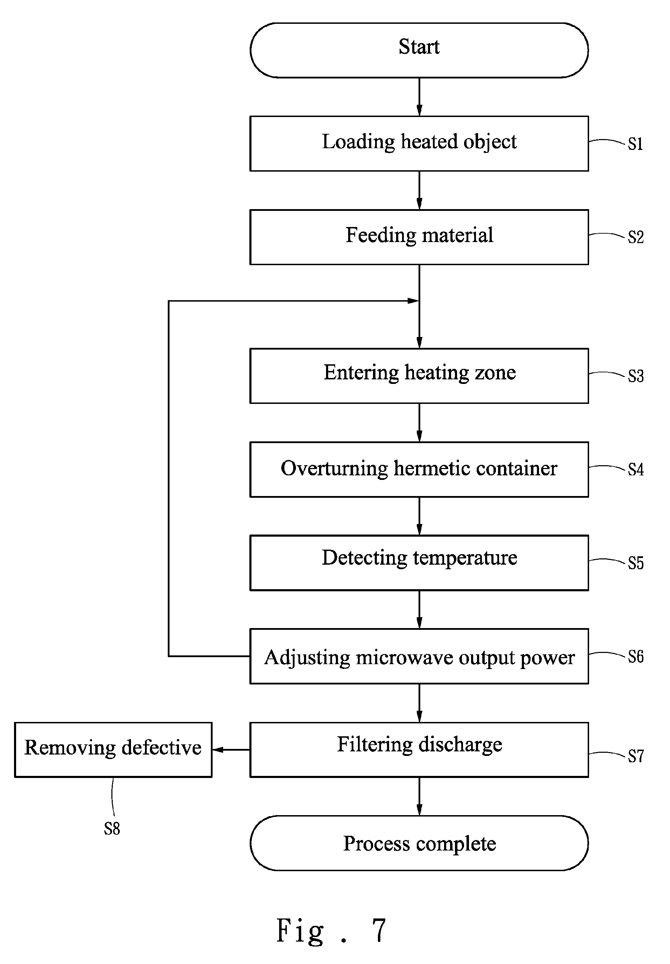

Fig. 7 shows a flowchart of the present invention. As shown in Fig. 7, in step S1, a step for loading a heated object is performed. The hermetic container 10 loaded with the heated object is placed into the microwave transparent and pressure resistant module 40.In step S2, a loading step is performed. That is, the microwave transparent and pressure resistant module 40 is slid and fastened onto the transporting device 30.In step S3, the microwave transparent and pressure resistant module 40 is forwarded into a heating zone. The microwave transparent and pressure resistant module 40 is moved by the transport device 30 to enter the effective region of the one or more than one magnetic controlled module 51, and the hermetic container 10 is heated. In step S4, the hermetic container 10 is overturned. By moving the hermetic container 10 along the course that overturns at least once, the hermetic container 10 is overturned to achieve thorough mixing and reach temperature equilibrium. In step S5, the temperature is measured. The balanced temperature of the hermetic container 10 or the heated object therein is measured. In step S6, the microwave output power is adjusted. After learning the thermal development profile of the hermetic container 10 or the heated object therein, the system appropriately adjusts the output power of the one or more than one magnetron controlled module 51 so that the temperature development of the heated object under successive processing satisfies manufacturing requirements. Methods of adjusting the output power of the magnetron controlled module 51 may be the typical process control method (PID) or Fuzzy Control Step S7 is performed after a predetermined number of rounds of overturning and heating. In step S7, the discharge is inspected. The microwave transparent and pressure resistant module 40 is slid out of the transporting device 30, and each heated object is sequentially inspected to make sure that it satisfies the temperature development requirements of the manufacturing process. The inspection is done according to the record of the temperature development of the heated object in the heating process. Step S8 is performed for the heated objects that fail to meet the requirements. In step S8, defective objects are filtered out and removed at the exit, and the hermetic container 10 is taken out to complete the heating process.

In conclusion, the present invention at least provides following advantages.
1. By applying pressure to the hermetic container through the microwave transparent and pressure resistant module, the hermetic container is capable of withstanding a high pressure without breaking. Thus, a pressure oven zone is not required, and construction costs can be effectively reduced while application safety is increased.
2. In the present invention, with the microwave penetrating the microwave transparent and pressure resistant module and the hermetic container, all parts in the hermetic container can be heated by the microwave to produce a quick heating process.
3. The present invention includes a stirring mechanism. By overturning the hermetic container using the overturning movement path, the heated object in the hermetic container is stirred, so that the different components of the heated object are frequently shifted by the overturning and stirring, thereby achieving more uniform heating and solving the issue of heating non-uniformity of conventional microwave heating.
4. The foregoing stirring mechanism not only achieves uniform heating, but also provides a way to measure the temperature of the heated object therein. On the premise of uniform heating, the temperature measured by the temperature measuring unit sufficiently represents the temperature of the entire heated object. This makes the subsequent closed-loop temperature control become feasible.
5. In the present invention, the one or more than one temperature measuring unit is used to measure the temperature of the hermetic container or the heated object therein. Having learned the thermal profile of the hermetic container or the heated object therein, the output power of the magnetron controlled module 51 can be adjusted so that the heated object that sequentially enters the system is able to perform the desired temperature development in the same number of cycles, hence meeting specific manufacturing requirements and maintaining stable heating process.
6. As the temperature of each hermetic container and the heated object therein is measured by the present invention, the temperature development of each heated object can be recorded during the heating process. According to the record, each heated object is sequentially inspected to make sure that it satisfies the temperature development requirements of the manufacturing process. The heated objects that fail to meet the requirements are filtered out and removed at the exit to ensure the quality of the products.
7. The present invention includes closed-loop temperature control, making it capable of implementing various kinds of heating processes and produce consistent and predictable products, significantly overcoming the drawbacks of conventional one-time microwave heating system. The present invention's repeated heating feature also satisfies the various requirements for different heating processes.
8. With the stirring mechanism, the present invention does not rely solely on the adjustment of the input microwave power or the cavity design as means of achieving heating uniformity. Instead, by overturning and stirring the heated object to shift the different components around, thermal exchange among these components with different power absorption rates can be thoroughly accomplished. Therefore, even when processing heated objects with varying contents, the system is able to maintain heating uniformity. The variances in the content of the heated object may be differences in compositions of biological tissues, e.g., the amount of fat in meats.
9. The present invention does not need an additional auxiliary heating medium or an external pressure system. Accordingly, the present invention reduces construction costs and satisfies application requirements.

In summary, there is disclosed a microwave heating system which heats a hermetic container 10 loaded with a heated object 11. The hermetic container 10 is accommodated and given pressure by a microwave transparent and pressure resistant module 40, and is fixed onto a transporting device 30 in a cyclic course. Microwave is generated by a microwave heating device 50 to perform heating. The hermetic container 10 is stirred while the transport device 30 carries and moves the hermetic container 10. The temperature of the hermetic container 10 or the heated object 11 is measured by a temperature measuring module 60. The number of times to stir and repeatedly heat the heated object 11 are appropriately determined in the design of the system. The output power and heating time of the microwave heating device 50 and the transmission speed of the transporting device 30 are adjustable during operations of the system, hence forming a closed-loop temperature control system.

## Claims

1. A microwave heating system, for performing a heating process on a hermetic container (10) loaded with a heated object (11), the system comprising:
a machine frame (20);
a transporting device (30), arranged onto the machine frame (20), including a cyclic moving course, the cyclic course including a stirring process;
at least one microwave transparent and pressure resistant module (40), including a pressure resistant container (41) with a space (411) to accommodate the hermetic container and a pressure resistant cover (42). The pressure resistant container (41) is fixed onto the transporting device (30), the pressure resistant cover (42) seals the pressure resistant container (41) and simultaneously applies pressure on the hermetic container (10);
a microwave heating device (50), comprising at least one magnetron controlled module (51) installed onto the machine frame (20) and next to the transporting device (30), for performing microwave heating on the hermetic container (10) when the transporting device (30) carries and moves the pressure container (41) and the heated object (11) is simultaneously stirred by the stirring process; and
a temperature measuring module (60), comprising at least one temperature measuring unit (61) arranged onto the machine frame (20) for measuring the temperature of the hermetic container (10).

2. The microwave heating system of claim 1, wherein the stirring process of the transporting device (30) is either overturning, vibration, rotation, or a combination of any of the three.

3. The microwave heating system of claim 1 or 2, wherein a head and a tail of the transporting device (30) can be connected and curve around at least one rotary wheel (31).

4. The microwave heating system of one of the preceding claims, wherein one or more than one magnetron controlled module (51) is arranged on either sides of the transporting device (30).

5. The microwave heating system of one of the preceding claims, wherein the one or more than one temperature measuring unit (61) is distributed next to the moving course.

6. The microwave heating system of claim 5, wherein the one or more than one temperature measuring unit (61) records the temperature of the hermetic container (10) and accordingly presents the thermal profile of said container, for the operator to decide accordingly whether to filter out the hermetic container (10) during inspection.

7. The microwave heating system of one of the preceding claims, wherein the transporting device (30) comprises multiple inverted hooks (34), and the pressure resistant container (41) comprises a lodging groove (43) that matches the inverted hooks (34).

8. The microwave heating system as claim in claim 7, wherein the pressure resistant container (41) is fixed by a bolt (44) onto a tray (412) set with the lodging groove (43).

9. The microwave heating system of one of the preceding claims, wherein the pressure resistant container (41) and the pressure resistant cover (42) possesses several channel (47).

10. The microwave heating system of one of the preceding claims, wherein the pressure resistant cover (42) includes a temperature sampling plate (46).

11. The microwave heating system of claim 10, wherein the temperature sampling plate (46) is either made of materials like plastic or quartz glass that are infrared ray permeable, or materials like titanium alloy or aluminum alloy that are infrared ray impermeable and do not absorb microwave.
